# EUROPÄISCHE PATENTANMELDUNG

(11) **EP 1 146 058 A1**
(43) Veröffentlichungstag der Anmeldung: **17.10.2001**
(21) Anmeldenummer: 01107213.9
(22) Anmeldetag: 23.03.2001
(51) Int. Cl.: C08F 10/00, C08F 4/646

(54) **Katalysatorlösung, enthaltend ionisch aktivierte Metallocen-Verbindungen**

(30) Priorität: 13.04.2000 DE 10018307
(71) Anmelder: BASF AKTIENGESELLSCHAFT, 67056 Ludwigshafen (DE)
(72) Erfinder: Gonioukh, Andrei, Dr., 67373 Dudenhofen (DE); Klimesch, Roger, Dr., 64665 Alsbach-Hähnlein (DE); Rau, Alexander, Dr., 64289 Darmstadt (DE); Götz, Christian, 64287 Darmstadt (DE); Luft, Gerhard, Prof. Dr., 64367 Mühltal (DE)

(57) **Zusammenfassung**

Verfahren zur Herstellung einer Katalysatorlösung zur Polymerisation oder Copolymerisation von 1-Olefinen, dadurch gekennzeichnet, dass man konzentrierte Lösungen oder Suspensionen der Komponenten A bis C, bei denen
A mindestens ein Metallocen,
B mindestens eine Metalloceniumionen-bildende Verbindung und
C mindestens eine Metallalkylverbindung,
bedeutet,
miteinander vermischt, wobei Komponente C auch in Substanz verwendet werden kann, wen sie flüssig vorliegt, anschließend das entstehende Zweiphasengemisch trennt und die untere Phase, die das ionisch aktivierte Metallocen enthält, ein oder mehrere Male mit einem Kohlenwasserstoff durch Extraktion reinigt.

## Beschreibung

Verfahren zur Herstellung einer Katalysatorlösung zur Polymerisation oder Copolymerisation von 1-Olefinen, dadurch gekennzeichnet, dass man konzentrierte Lösungen oder Suspensionen der Komponenten A bis C, bei denen
- A: mindestens ein Metallocen,
- B: mindestens eine Metalloceniumionen-bildende Verbindung und
- C: mindestens eine Metallalkylverbindung
bedeutet, miteinander vermischt, wobei Komponente C auch in Substanz verwendet werden kann, wenn sie flüssig vorliegt, anschließend das entstehende Zweiphasengemisch trennt und die untere Phase, die das ionisch aktivierte Metallocen enthält, ein oder mehrere Male mit einem Kohlenwasserstoff durch Extraktion reinigt. Weiterhin betrifft diese Erfindung die Verwendung der erfindungsgemäß hergestellten Katalysatorlösung zur Polymerisation oder Copolymerisation von 1-Olefinen. Weiterhin betrifft die vorliegende Erfindung die Verwendung der erfindungsgemäß hergestellten Katalysatorlösung zur Herstellung eines Trägerkatalysators zur Polymerisation oder Copolymerisation von 1-Olefinen, einen Trägerkatalysator, erhältlich durch Verwendung der erfindungsgemäß hergestellten Katalysatorlösung, sowie ein Verfahren zur Polymerisation oder Copolymerisation von 1-Olefinen unter Verwendung des erfindungsgemäßen Trägerkatalysators.

Metallocenkatalysatoren sind zur Polymerisation von Olefinen von großem Interesse, weil sich mit ihnen attraktive Produkte herstellen lassen, die sich beispielsweise durch eine enge Molekulargewichtsverteilung und einen gleichmäßigen Comonomereinbau auszeichnen. Zur Aktivierung von Metallocenen sind prinzipiell zwei Methoden bekannt.

Einerseits lassen sich Metallocene mit Aluminoxanen aktivieren, bekanntestes Beispiel ist Methylaluminoxan ("MAO", EP-A 0 035 242). Mit Methylaluminoxan aktivierte Metallocene lassen sich gut trägern (EP-B 0 206 794). Die Verwendung von Aluminoxanen hat jedoch gravierende Nachteile:
- Aluminoxane müssen üblicherweise in großen molaren Überschüssen, beispielsweise 20:1 bis 1000:1 oder mehr, bezogen auf Metallocen, verwendet werden. Dadurch werden sie zu einem Kostenfaktor. Außerdem führen sie zu einem erhöhten Restaschegehalt der Polymere.
- Aluminoxane sind molekular nicht definiert, die zur Qualitätskontrolle notwendige Analytik ist deshalb schwierig.
- Aluminoxane werden üblicherweise in Form ihrer verdünnten Lösung transportiert, wodurch Masse und Volumen steigt.
- Mit Aluminoxanen aktivierte Katalysatoren, insbesondere solche mit hohem Aluminiumgehalt, sind pyrophor, was spezielle Sorgfalt beim Umgang mit ihnen erforderlich macht;
- Mit Aluminoxanen aktivierte Katalysatoren müssen in polymerisationsaktiver Form dosiert werden, was zu Problemen wie beispielsweise Polymerablagerungen in den Dosierleitungen kontinuierlich betriebener Anlagen führen kann.

US 5,198,401 lehrt, dass Metallocene der allgemeinen Formel CpCp'MX₂ oder Cp-A-Cp'MX₂ mit Ammonium-Tetraarylboraten aktiviert werden können, wobei unter Cp und Cp' gleiche oder verschiedene, substituierte oder unsubstituierte Metallocene und unter A eine verbrückende Gruppe zu verstehen ist. Unter X sind Kohlenwasserstoffreste oder Hydridionen zu verstehen. Solche Metallocene sind jedoch sehr empfindlich gegen Lewis-Basen und gegen Wasser, was die Handhabung erschwert. In EP-A 0 507 876 wird offenbart, dass Katalysatorsysteme aus Metallocenen und Ammonium-Tetraarylboraten geträgert werden können, beispielsweise auf Kieselgel. Diese geträgerten Systeme sind bereits bei der Dosierung polymerisationsaktiv, so dass es zu Dosierungsproblemen kommen kann. Insgesamt ist die Aktivität jedoch gering, was auf Lewis-basische Stellen im Kieselgel zurückgeführt wird.

EP 0 882 077 lehrt, dass auch die wesentlich Hydrolyse-resistenteren Metallocendichloride zusammen mit Aluminiumalkyl und einem Tetraarylborat oder Triarylboran, vorzugsweise mit pentafluorierten Arylgruppen, auf Kieselgel oder einem anderen geeigneten Trägermaterial geträgert werden können und nach Aktivierung im Polymerisationsreaktor gut geeignete Katalysatoren für die Olefinpolymerisation liefern.

Die Verwendung von Ammoniumsalzen wie *N*,*N*-Dimethylanilinium-tetrakis[pentafluorphenyl]-borat oder Tri-*n*-butyl-tetrakis[pentafluorphenyl]-borat hat jedoch den Nachteil, dass giftige Amine wie beispielsweise *N*,*N*-Dimethylanilin ode Tri-*n*-butylamin im Polymer verbleiben können, die das Polymer ungeeignet für Lebensmittelanwendungen machen können.

EP-B 0 426 637 lehrt, dass Metallocene auch mit Verbindungen wie beispielsweise Triphenylmethyl-tetrakis[pentafluorphenyl]-borat aktiviert werden können. Nachteilig ist jedoch, dass als Reaktionsprodukt 1,1,1-Triphenylethan im Produkt verbleibt, das leicht oxidierbar ist und zu Verfärbungen des Produkts führen kann.

In *J. Am. Chem*. *Soc.* **1991,** *113,* 3623 werden als Aktivatoren für Metallocene Triarylborane wie beispielsweise Tris-(pentafluorphenyl)boran offenbart. Diese lassen sich trägern, wie durch EP-A 0 882 077 gelehrt wird. Jedoch ist die Handhabung einer so empfindlichen Verbindung schwierig, sie ist sehr empfindlich gegen Lewis-Basen wie beispielsweise Wasser oder Alkohol oder auch Ethern. Kommerziell ist Tris-(pentafluorphenyl)boran lediglich in Form stark verdünnter Lösungen (< 2 Gew.-%) zu erwerben, was weiterhin den Umgang mit großen Mengen Lösemitteln notwendig macht.

Nachteilig an allen bisher genannten Katalysatorsystemen ist weiterhin, dass sie alterungsempfindlich sind.

EP-A 0 574 370 offenbart einen Katalysator mit guter Wirksamkeit nach der Alterung, der jedoch mit MAO aktiviert wird. Gewünscht sind jedoch MAO-freie Katalysatorsysteme. EP-A 0 843 687 legt alterungsresistente Metallocenkatalysatoren offen. Sie müssen jedoch mit Methylaluminoxan aktiviert werden. EP-A 0 885 248 offenbart spezielle alterungsunempfindliche Metallocenkatalysatoren, deren Alterungsunempfindlichkeit auf einem speziellen Metallocen:MAO-Verhältnis im Bereich von 1:80 bis 1:200 beruht. Auch dieser Katalysator enthält die teuren Aluminoxane.

DE-A 197 56 265 offenbart Metallocenkatalysatoren, die durch einen Überzug mit Wachs oder Silikonen gegen Alterung geschützt wurden. Nachteilig an diesen Katalysatoren ist jedoch, dass bei der Polymerisation, insbesondere in der Gasphase, sich die eingesetzten Wachse in der Apparatur anreichern können und zu Problemen führen können.

Es bestand also die Aufgabe,
- einen MAO-freien Metallocen-Katalysator bereitzustellen, der gut lagerbar ist und dessen Aktivität auch noch nach Monaten nicht signifikant abnimmt. Weiterhin sollte er leicht herstellbar sein, und die mit diesem Katalysatoren hergestellten Polyolefine sollen frei sein von Zusätzen wie giftigen Aminen oder leicht oxidierbaren Aromaten wie beispielsweise Triphenylethan.
- ein Verfahren zur Herstellung eines lagerstabilen Metallocenkatalysators bereitzustellen, und schließlich,
- mit einem lagerstabilen Metallocen-Katalysator Olefine wie beispielsweise Ethylen oder Propylen zu polymerisieren oder mit weiteren Monomeren zu copolymerisieren.

Es wurde nun gefunden, dass diese Aufgabe gelöst werden kann, indem man mindestens ein Metallocen, mindestens eine Metalloceniumionen-bildende Verbindung, und mindestens eine Metallalkylverbindung, in Form konzentrierter Lösungen miteinander vermischt, das entstehende Zweiphasengemisch trennt, die untere Phase ein oder mehrere Male mit einem Lösemittel extrahiert und das anfallende ölige Gemisch zur Polymerisation einsetzt.

Unter Metallocenen werden Sandwich-Verbindungen beispielsweise der allgemeinen Formeln I a - e verstanden.

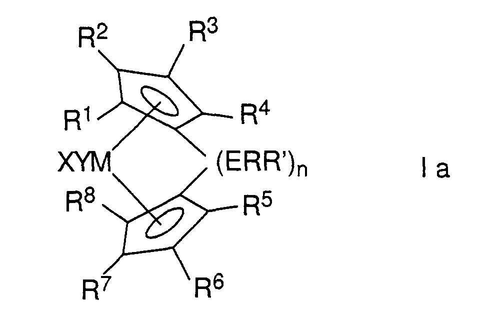

In Formel I a
- ist M ein Element aus der Reihe Ti, Zr, Hf, V, Nb oder Ta in der Oxidationsstufe +4; bevorzugt Ti, Zr oder Hf und besonders bevorzugt Zr oder Hf;
- sind X und Y unabhängig voneinander
   - Halogen wie Fluor, Chlor, Brom oder Jod, wobei Chlor und Brom bevorzugt sind;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR¹⁷R¹⁸, wobei R¹⁷ und R¹⁸ unabhängig voneinander aus Wasserstoff, C₁-C₁₂-Alkylgruppen, C₂-C₁₂-Alkenylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die N-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
- ist E ausgewählt aus C, Si, Ge oder Sn; bevorzugt sind C und Si;
- ist n ausgewählt aus den Zahlen 1,2 oder 3; bevorzugt ist n gleich 1 oder 2 und besonders bevorzugt 1;
- sind R und R' unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wiePhenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - oder C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy
   wobei R und R' zusammen mit E gemeinsam einen gesättigten oder ungesättigten 4- bis 9-gliedrigen Ring bilden können;
- sind R¹ bis R⁸ unabhängig voneinander
- Wasserstoff,
- Halogen wie Fluor, Chlor, Brom oder Jod, wobei Chlor und Brom bevorzugt sind;
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Siloxygruppen OSiR¹⁹R²⁰R²¹, wobei R¹⁹ bis R²¹ unabhängig voneinander aus Wasserstoff, C₁-C₁₂-Alkylgruppen, C₃-C₁₂-Cycloalkylgruppen, C₆-C₁₄-Arylgruppen, substituierte C₆-C₁₄-Arylgruppen, C₁-C₁₂-Alkoxygruppen, Benzylgruppen und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Arylgruppen, die ihrerseits substituiert sind mit einem oder mehreren C₁-C₁₂-Alkylgruppen, C₁-C₁₂-Alkenylgruppen, C₃-C₁₂-Cycloalkylgruppen, C₆-C₁₄-Arylgruppen, Siloxygruppen OSiR¹⁹R²⁰R²¹ oder C₁-C₁₂-Alkoxygruppen, wobei diese Gruppen wie oben spezifiziert sind;
wobei zwei benachbarte Reste gemeinsam einen gesättigten oder ungesättigten 4- bis 9-gliedrigen Ring bilden können,
beispielsweise können zwei Reste zusammen sein: -(CH₂)₃- (Trimethylen), -(CH₂)₄- (Tetramethylen),-(CH₂)₅- (Pentamethylen),
-(CH₂)₆- (Hexamethylen), -CH₂-CH=CH-,
-CH₂-CH=CH-CH₂-, -CH=CH-CH=CH-, -O-CH₂-O-, -O-CH(CH₃)-O-,
-O-CH-(C₆H₅)-O-,
-O-CH₂-CH₂-O-, -O-C(CH₃)₂-O-, -N(CH₃)-CH₂-CH₂-N(CH₃)-,
-N(CH₃)-CH₂-N(CH₃)- oder
-O-Si(CH₃)₂-O-.

Eine besondere Ausführungsform sind Metallocene gemäß Formel I b.

In Formel **I b** 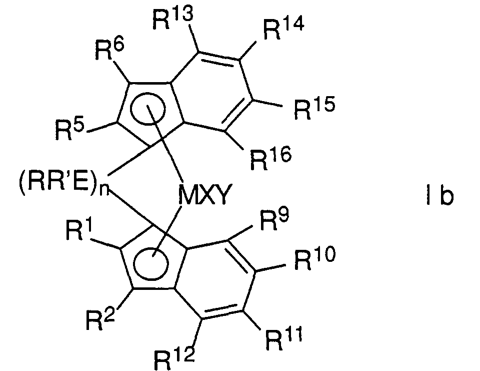
- ist M ein Element aus der Reihe Ti, Zr, Hf, V, Nb oder Ta in der Oxidationsstufe +4; bevorzugt Ti, Zr oder Hf und besonders bevorzugt Zr oder Hf;
- sind X und Y unabhängig voneinander
   - Halogen wie Fluor, Chlor, Brom oder Jod, wobei Chlor und Brom bevorzugt sind;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR¹⁷R¹⁸, wobei R¹⁷ und R¹⁸ unabhängig voneinander aus Wasserstoff, C₁-C₁₂-Alkylgruppen, C₂-C₁₂-Alkenylgruppen, Benzylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
- ist E ausgewählt aus C, Si, Ge oder Sn; bevorzugt sind C und Si;
- ist n ausgewählt aus den Zahlen 1,2 oder 3; bevorzugt ist n 1 oder 2 und besonders bevorzugt 1;
- sind R und R' unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - oder C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy
   wobei R und R' zusammen mit E gemeinsam einen gesättigten oder ungesättigten 4- bis 9-gliedrigen Ring bilden können;
- sind R¹, R², R⁵, R⁶ und R⁹ bis R¹⁶ unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Siloxygruppen OSiR¹⁹R²⁰R²¹, wobei R¹⁹ bis R²¹ unabhängig voneinander aus Wasserstoff, C₁-C₁₂-Alkylgruppen, C₃-C₁₂-Cycloalkylgruppen, C₆-C₁₄-Arylgruppen, substituierte C₆-C₁₄-Arylgruppen, C₁-C₁₂-Alkoxygruppen, Benzylgruppen und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy-und die Tri-para-xylylsilyloxygruppe; besonders bevorzugt sind die Trimethylsilyloxygruppe und die tert.-Butyldimethylsilyloxygruppe;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Arylgruppen, die ihrerseits substituiert sind mit einem oder mehreren C₁-C₁₂-Alkylgruppen, C₁-C₁₂-Alkenylgruppen, C₃-C₁₂-Cycloalkylgruppen, C₆-C₁₄-Arylgruppen, Siloxygruppen OSiR¹⁹R²⁰R²¹ oder C₁-C₁₂-Alkoxygruppen, wobei diese Gruppen wie oben spezifiziert sind;
wobei zwei benachbarte Reste gemeinsam einen gesättigten oder ungesättigten 4- bis 9-gliedrigen Ring bilden können, beispielsweise können zwei Reste zusammen sein: -(CH₂)₃- (Trimethylen), -(CH₂)₄- (Tetramethylen),-(CH₂)₅- (Pentamethylen),
-O-(CH₂)₆- (Hexamethylen), -CH₂-CH=CH-,
-CH₂-CH=CH-CH₂-, -CH=CH-CH=CH-, -O-CH₂-O-, -O-CH(CH₃)-O-,
-CH-(C₆H₅)-O-,
-O-CH₂-CH₂-O-, -O-C(CH₃)₂-O-, -N(CH₃)-CH₂-CH₂-N(CH₃)-,
-N(CH₃)-CH₂-N(CH₃) - oder
-O-Si(CH₃)₂-O-.

In Formel I c 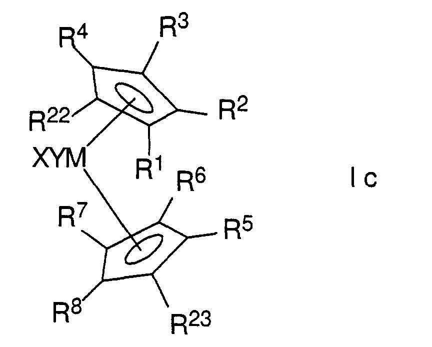
- ist M ein Element aus der Reihe Ti, Zr, Hf, V, Nb oder Ta in der Oxidationsstufe +4; bevorzugt Ti, Zr oder Hf und besonders bevorzugt Zr oder Hf;
- sind X und Y unabhängig voneinander
   - Halogen wie Fluor, Chlor, Brom oder Jod, wobei Chlor und Brom bevorzugt sind;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR¹⁷R¹⁸, wobei R¹⁷ und R¹⁸ unabhängig voneinander aus Wasserstoff, C₁-C₁₂-Alkylgruppen, C₂-C₁₂-Alkenylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
- sind R¹ bis R⁸ sowie R²² und R²³ unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrom methyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Siloxygruppen OSiR¹⁹R²⁰R²¹, wobei R¹⁹ bis R²¹ unabhängig voneinander aus Wasserstoff, C₁-C₁₂-Alkylgruppen, C₂-C₁₂-Alkenyl, C₃-C₁₂-Cycloalkyl, C₆-C₁₄-Aryl, substituierten C₆-C₁₄-Aryl, C₁-C₁₂-Alkoxygruppen, Benzylgruppen und C₆-C₁₄-Arylgruppen ausgewählt; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Arylgruppen, die ihrerseits substituiert sind mit einem oder mehreren C₁-C₁₂-Alkylgruppen, C₁-C₁₂-Alkenylgruppen, C₃-C₁₂-Cycloalkylgruppen, C₆-C₁₄-Arylgruppen, Siloxygruppen OSiR¹¹R¹²R¹³ oder C₁-C₁₂-Alkoxygruppen, wobei diese Gruppen wie oben spezifiziert sind;
wobei zwei benachbarte Reste gemeinsam einen gesättigten oder ungesättigten 4- bis 9-gliedrigen Ring bilden können. Beispielsweise können zwei Reste zusammen sein:
-(CH₂)₃- (Trimethylen), -(CH₂)₄- (Tetramethylen), -(CH₂)₅-(Pentamethylen), -(CH₂)₆- (Hexamethylen), -CH₂-CH=CH-,
-CH₂-CH=CH-CH₂-, -CH=CH-CH=CH-, -O-CH₂-O-,
-O-CH(CH₃)-O-, -O-CH-(C₆H₅)-O-, -O-CH₂-CH₂-O-, -O-C(CH₃)₂-O-,
-N(CH₃)-CH₂-CH₂-N(CH₃)-, -N(CH₃)-CH₂-N(CH₃) - oder
-O-Si(CH₃)₂-O-.

Eine besondere Ausführungsform sind Metallocene gemäß Formel I d.

In Formel I d 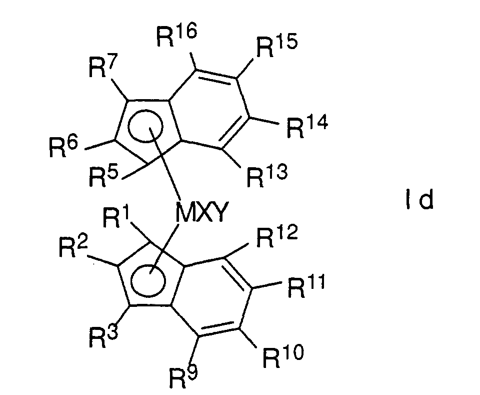
- ist M ein Element aus der Reihe Ti, Zr, Hf, V, Nb oder Ta in der Oxidationsstufe +4; bevorzugt Ti, Zr oder Hf und besonders bevorzugt Zr oder Hf;
- sind X und Y unabhängig voneinander
   - Halogen wie Fluor, Chlor, Brom oder Jod, wobei Chlor und Brom bevorzugt sind;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR¹⁷R¹⁸, wobei R¹⁷ und R¹⁸ unabhängig voneinander aus Wasserstoff, C₁-C₁₂-Alkylgruppen, Benzylgruppen und C₆-C₁₄-Arylgruppen ausgewählt sind, die einen gesättigten oder ungesättigten 5-10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
- sind R¹ bis R³, R⁵ bis R⁷ und R⁹ bis R¹⁶ unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrom methyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Siloxygruppen OSiR¹⁹R²⁰R²¹, wobei R¹⁹ bis R²¹ unabhängig voneinander aus Wasserstoff, C₁-C₁₂-Alkylgruppen, C₂-C₁₂-Alkenyl, C₃-C₁₂-Cycloalkyl, C₆-C₁₄-Aryl, substituierten C₆-C₁₄-Aryl, C₁-C₁₂-Alkoxygruppen, Benzylgruppen und C₆-C₁₄-Arylgruppen ausgewählt; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Arylgruppen, die ihrerseits substituiert sind mit einem oder mehreren C₁-C₁₂-Alkylgruppen, C₁-C₁₂-Alkenylgruppen, C₃-C₁₂-Cycloalkylgruppen, C₆-C₁₄-Arylgruppen, Siloxygruppen OSiR¹⁹R²⁰R²¹ oder C₁-C₁₂-Alkoxygruppen, wobei diese Gruppen wie oben spezifiziert sind;
wobei zwei benachbarte Reste gemeinsam einen gesättigten oder ungesättigten 4- bis 9-gliedrigen Ring bilden können. Beispielsweise können zwei Reste zusammen sein:
-(CH₂)₃- (Trimethylen),-(CH₂)₄- (Tetramethylen), -(CH₂)₅-(Pentamethylen), -(CH₂)₆- (Hexamethylen), -CH₂-CH=CH-,
-CH₂-CH=CH-CH₂-, -CH=CH-CH=CH-, -O-CH₂-O-,
-O-CH(CH₃)-O-, -O-CH-(C₆H₅)-O-, -O-CH₂-CH₂-O-, -O-C(CH₃)₂-O-,
-N(CH₃)-CH₂-CH₂-N(CH₃)-, -N(CH₃)-CH₂-N(CH₃) - oder -O-Si(CH₃)₂-O-.

In Formel **I e** 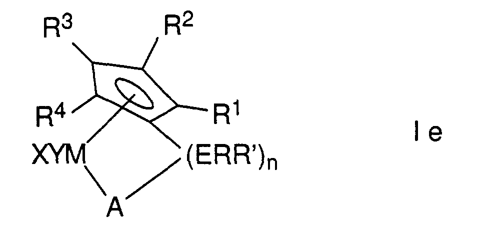
- ist M ein Element aus der Reihe Ti, Zr, Hf, V, Nb oder Ta in der Oxidationsstufe +4; bevorzugt Ti, Zr oder Hf und besonders bevorzugt Zr oder Hf;
- sind X und Y unabhängig voneinander
   - Halogen wie Fluor, Chlor, Brom oder Jod, wobei Chlor und Brom bevorzugt sind;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR¹⁷R¹⁸, wobei R¹⁷ und R¹⁸ unabhängig voneinander aus Wasserstoff, C₁-C₆-Alkylgruppen und C₆-C₁₄-Arylgruppen ausgewählt sind, die einen gesättigten oder ungesättigten 5-10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
- ist E ausgewählt aus C, Si, Ge oder Sn; bevorzugt sind C und Si;
- ist n ausgewählt aus den Zahlen 1,2 oder 3; bevorzugt ist n 1 oder 2 und besonders bevorzugt 1;
- sind R und R' unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wiePhenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - oder C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy
wobei R und R' gemeinsam einen gesättigten oder ungesättigten 4- bis 9-gliedrigen Ring bilden können;
- sind R¹ bis R⁴ unabhängig voneinander
   - Wasserstoff,
   - Halogen wie Fluor, Chlor, Brom oder Jod, wobei Chlor und Brom bevorzugt sind;
   - C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wiePhenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Siloxygruppen OSiR¹⁹R²⁰R²¹, wobei R¹⁹ bis R²¹ unabhängig voneinander aus Wasserstoff, C₁-C₁₂-Alkylgruppen, C₂-C₁₂-Alkenyl, C₃-C₁₂-Cycloalkyl, C₆-C₁₄-Aryl, substituierten C₆-C₁₄-Aryl, C₁-C₁₂-Alkoxygruppen, Benzylgruppen und C₆-C₁₄-Arylgruppen ausgewählt; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Arylgruppen, die ihrerseits substituiert sind mit einem oder mehreren C₁-C₁₂-Alkylgruppen, C₁-C₁₂-Alkenylgruppen, C₃-C₁₂-Cycloalkylgruppen, C₆-C₁₄-Arylgruppen, Siloxygruppen OSiR⁸R⁹R¹⁰ oder C₁-C₁₂-Alkoxygruppen, wobei diese Gruppen wie oben spezifiziert sind;
wobei zwei benachbarte Reste gemeinsam einen gesättigten oder ungesättigten 4- bis 9-gliedrigen Ring bilden können, bevorzugt 5- bis 8-gliedrig. Beispielsweise können zwei Reste zusammen sein: -(CH₂)₃- (Trimethylen), -(CH₂)₄- (Tetramethylen),
-(CH₂)₅- (Pentamethylen),-(CH₂)₆- (Hexamethylen),
-CH₂-CH=CH-, -CH₂-CH=CH-CH₂-,
-CH=CH-CH=CH-, -O-CH₂-O-, -O-CH(CH₃)-O-, -O-CH-(C₆H₅)-O-,
-O-CH₂-CH₂-O-,
-O-C(CH₃)₂-O-, -N(CH₃)-CH₂-CH₂-N(CH₃)-, -N(CH₃)-CH₂-N(CH₃)-
oder -O-Si(CH₃)₂-O-;
   - ist unter A Sauerstoff, Schwefel, N-R²⁴ oder P-R²⁴ zu verstehen, wobei R²⁴ ausgewählt wird aus Halogen, C₁-C₁₂-Alkyl, C₃-C₁₂-Cycloalkyl, substituierten oder unsubstituierten C₆-C₁₄-Arylgruppen oder C₁-C₁₂-Alkoxygruppen und wobei diese Gruppen wie oben definiert sind. Illustrative, ganz besonders bevorzugte Beispiele für Metallocene der Formeln I a-e sind:
      Rac. Ethylen-bis-[indenyl]-Zirkoniumdichlorid,
      Rac. Ethylen-bis-[4,5,6,7-tetrahydroindenyl]-Zirkoniumdichlorid,
      Rac. Dimethylsilyl-bis-[2-methylindenyl]-Zirkoniumdichlorid,
      Rac. Tetramethylensilyl-bis-[2-Methylindenyl]-Zirkoniumdichlorid, Rac. Dimethylsilyl-bis-[2-methylbenzo-(4,5)-indenyl]-Zirkoniumdichlorid,
      Rac. Dimethylsilyl-bis-[2-methyl-4-tert.-butylcyclopentadieny-1]-Zirkoniumdichlorid,
      Rac. Dimethylsilyl-bis-[2,3,5-trimethylcyclopentadienyl]-Zirkoniumdichlorid,
      Rac. Dimethylsilyl-bis-[2-methyl-4-phenylindenyl]-Zirkoniumdichlorid,
      2,2-Isopropyliden-cyclopentadienyl-9-Fluorenyl-Zirkoniumdichlorid,
      Diphenylmethyl-cyclopentadienyl-9-Fluorenyl-Zirkoniumdichlorid;
      Bis-(n-butylcyclopentadienyl)-Zirkoniumdichlorid,
      Bis-[2-methyl-4-tert.-butylcyclopentadienyl]-Zirkoniumdichlorid,
      Bis-[2,3,5-trimethylcyclopentadienyl]-Zirkoniumdichlorid,
      Bis-[indenyl]-Zirkoniumdichlorid,
      Bis-[2-Methylindenyl]-Zirkoniumdichlorid,
      Bis-[2-Methylbenzo-(4,5)-indenyl]-Zirkoniumdichlorid,
      Bis-[4,5,6,7-Tetrahydroindenyl]-Zirkoniumdichlorid,
      Bis-[2-Methyl-4-phenylindenyl]-Zirkoniumdichlorid;
      Dimethylsilyl-*tert*.-butylamido-tetramethylcyclopentadienyl-Titandichlorid,
      Dimethylsilyl-*iso*-propylamido-tetramethylcyclopentadienyl-Titandichlorid,
      2,3,5-Trimethylsilyl-*tert*.-butylamido-tetramethylcyclopentadienyl-Titandichlorid,
      Dimethylsilyl-phenylamido-tetramethylcyclopentadienyl-Titandichlorid,
      Dimethylsilyloxy-tetramethylcyclopentadienyl-Titandichlorid,
      2,3,5-Trimethylsilyloxy-tetramethylcyclopentadienyl-Titandichlorid
   sowie die korrespondierenden Dibromide.

Als Metallalkylverbindungen sind insbesondere Lithium- und Aluminiumalkylverbindungen der allgemeinen Formel LiR²⁵ bzw. Al(R²⁵)₃ geeignet. Dabei sind die Reste R²⁵ gleich oder verschieden und unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenylpropyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Ganz besonders bevorzugte Aluminiumalkylverbindungen sind Trimethylaluminium, Triethylaluminium, Triisobutylaluminium und Tri-*n*-hexylaluminium; ganz besonders bevorzugte Lithiumalkylverbindung ist n-Butyllithium.

Auch Gemische verschiedener Metallalkylverbindungen sind geeignet.

Als Metalloceniumionen-bildende Verbindungen sind beispielsweise Bor-Verbindungen mit elektronenziehenden Resten (z.B. *N*,*N*-Dimethylanilinium-tetrakis-pentafluorphenylborat, Tri-n-butylammonium-tetrakis-pentafluorphenylborat, *N*,*N*-Dimethylanilinium-tetrakis-(3,5-bisperfluormethyl)-phenylborat, Tri-n-butylammonium-tetrakis-(3,5-bisperfluormethyl)-phenylborat, *N*,*N*-Dimethylbenzyltetrakispentafluorphenylborat sowie Tritylium-tetrakispentafluorphenylborat) sowie die korrespondierenden arylierten Aluminiumverbindungen geeignet. Diese Aktivatoren sind in EP-A 0 468 537 sowie EP-A 0 426 638 offengelegt. Bevorzugt sind Dimethylanilinium-tetrakis-pentafluorphenylborat und Tritylium-tetrakispentafluorphenylborat.

Die Komponenten Metallocen, Metallalkylverbindung und Metalloceniumionen-bildende Verbindung werden in Form ihrer konzentrierten Lösungen miteinander vermischt, darunter werden Lösungen verstanden, deren Konzentration mindestens 0,1 mol/l, bevorzugt mindestens 0,15 mol/l beträgt. Besonders bevorzugt werden gesättigte Lösungen verwendet. Durch die Löslichkeit des Metallocens und der Metalloceniumionen-bildenden Verbindung ist der Konzentration nach oben Grenzen gesetzt. Es können auch Suspensionen des Metallocens oder der Metalloceniumionen-bildenden Verbindung eingesetzt werden, da sich die Komponenten A uns B im Verlauf der Reaktion üblicherweise lösen.

Auch können die Metallalkylverbindungen in Substanz eingesetzt werden, wenn sie unter den Reaktionsbedingungen flüssig sind.

Die Reihenfolge der Zugabe ist an sich unkritisch; bevorzugte Ausführungsform ist, zunächst Metallocen und Metallalkylverbindung miteinander umzusetzen und dann die Metalloceniumionen-bildende Verbindung zuzusetzen.

Bezüglich der Mengenverhältnisse hat sich bewährt, für 1 Äquivalent Metallocen die Metallalkylverbindung in einem Bereich von 1:2 bis 1:400, bevorzugt 1:20 bis 1:100 und besonders bevorzugt im Bereich von 1:25 bis 1:50 zuzusetzen. Bei geringeren Mengen eingesetzter Metallalkylverbindung ist eine vollständige Umsetzung nicht mehr gewährleistet. Höhere Mengen an Metallalkylverbindung sind zwar nicht prinzipiell schädlich für die Reaktion, haben aber keinen positiven Effekt und sind deshalb wirtschaftlich nachteilig.

Die Reaktionsbedingungen sind an sich unkritisch. Als Lösemittel wird ein Kohlenwasserstoff verwendet, in dem alle Komponenten löslich sind. Bevorzugt sind aromatische Kohlenwasserstoffe wie beispielsweise Benzol, Toluol, Ethylbenzol oder Xylol, wobei alle isomeren Xylole geeignet sind. Auch Mischungen aus mehreren Kohlenwasserstoffen sind geeignet. Prinzipiell lässt sich die Lösung auch in einem aliphatischen Kohlenwasserstoff als Lösemittel herstellen, wie n-Heptan oder Cyclohexan, jedoch ist diese Variante wegen der meist nur geringen Löslichkeit der Metalloceniumionen-bildenden Verbindungen nicht bevorzugt.

Die Temperatur lässt sich in weiten Bereichen variieren, bevorzugt liegt sie im Bereich von 0°C bis zum Siedepunkt des verwendeten Lösemittels. Besonders bevorzugt liegt die Temperatur über 60°C.

Auf jeden Fall aber muss die Reaktion unter Ausschluss von Luft und Feuchtigkeit durchgeführt werden, wozu beispielsweise die Schlenk-Technik geeignet ist.

Wenn man die Komponenten miteinander vereinigt, beobachtet man eine Phasentrennung in eine im Allgemeinen farblose, leichtere Phase und eine je nach Wahl des Metallocens gefärbte, schwerere ölige Phase. Das Metallocen befindet sich dabei in der schwereren Phase. Eine ähnliche Phasentrennung wurde bereits von Turner et al. in US 5,198,401 bei der Umsetzung von Metallocendialkyl mit einer Metalloceniumionen-bildenden Verbindung beobachtet und NMR-spektroskopisch analysiert. Die nach Turner erhältliche Lösung lässt sich prinzipiell zur Polymerisation einsetzen, jedoch enthält sie noch Amine, die durch Deprotonierung der eingesetzten Ammoniumionen erhalten werden.

Ein wesentlicher Schritt des erfindungsgemäßen Verfahrens besteht nun darin, die obere Phase, die im Wesentlichen neben dem Lösemittel nur Metallalkylverbindung und Amin oder Triphenylethan enthält, abzutrennen und die ölige Phase ein- oder mehrfach mit einem inerten Lösemittel zu extrahieren. Als Lösemittel kommen in erster Linie Kohlenwasserstoffe in Frage, beispielsweise Benzol, Toluol, Ethylbenzol oder Xylol, wobei alle isomeren Xylole geeignet sind. Auch Mischungen aus mehreren Kohlenwasserstoffen sind geeignet. Prinzipiell lässt sich die ölige Phase auch mit einem aliphatischen Kohlenwasserstoff extrahieren, beispielsweise n-Heptan oder Cyclohexan. Das Volumenverhältnis Extraktionsmittel : ölige Phase sollte 5 : 1 nicht übersteigen, bevorzugt ist ein Volumenverhältnis im Bereich von 1 : 1 bis 3 : 1.

Zur Trennung der Phasen sind gängige Techniken der organischen und der metallorganischen Chemie geeignet, wie beispielsweise Abhebern oder die Verwendung von inertisierten Schütteltrichtern.

Im Gegensatz zu einer nicht-extrahierten Lösung ist die extrahierte Lösung frei von giftigen Aminen, leicht oxidierbaren Kohlenwasserstoffen und Metallalkylverbindungen. Sie ist monatelang unzersetzt haltbar und polymerisationsaktiv.

Aus der Literatur ist bekannt, dass man die nicht-extrahierte ölige Phase auch eindampfen kann. In ausgewählten Fällen ist es gelungen, die katalytisch aktive Spezies durch Kristallisation zu isolieren. Das erfindungsgemäße Verfahren hat demgegenüber den Vorteil, dass es auch bei den technisch bedeutsamen schlecht kristallisierenden Derivaten leicht durchzuführen ist. Außerdem gelingt es, *N*,*N*-Dimethylanilin oder andere giftige Amine auch in den Fällen leicht und vollständig zu entfernen, in denen es mit dem Metallocen cokristallisiert oder leicht in der Koordinationssphäre verbleibt.

Die nach dem erfindungsgemäßen Verfahren erhältliche Lösung lässt sich in den gängigen Verfahren, d.h. in Lösungs-, Masse-, Suspensions- und Gasphasenpolymerisationsverfahren, als Katalysator für die Polymerisation oder Copolymerisation von 1-Olefinen einsetzen. Als 1-Olefine sind geeignet: Ethylen, Propylen, But-1-en oder 1-Hexen. Bevorzugt sind Ethylen oder Propylen. Auch zur Copolymerisation von Ethylen und Propylen miteinander oder mit 0 bis 20 mol-% 1-Buten, 1-Penten, 1-Hexen, 1-Octen, 1-Decen oder 1-Undecen lässt sich die erfindungsgemäße Katalysatorlösung einsetzen. Zur Vereinfachung der Dosierung kann die Katalysatorlösung mit einem Lösemittel verdünnt werden. Als Lösemittel kommen in erster Linie Kohlenwasserstoffe in Frage, beispielsweise Benzol, Toluol, Ethylbenzol oder Xylol, jedoch werden die Volumina der Verdünnungsmittel so gewählt, dass sie deutlich größer sind als die zu verdünnenden Katalysatorlösungen. Unter deutlich größer ist ein Verhältnis von mindestens 10:1, bevorzugt mindestens 20:1 und besonders bevorzugt mindestens 50:1 zu verstehen.

Will man die nach dem erfindungsgemäßen Verfahren erhältliche Katalysatorlösung für die Gasphasenpolymerisation von Ethylen oder Propylen einsetzen, so kann man sie mit Hilfe einer Spraydüse dosieren, wie sie in WO 97/46599 offenbart ist. Es ist jedoch eine bevorzugte Ausführungsform, die nach dem erfindungsgemäßen Verfahren erhältliche Lösung zur Herstellung eines Trägerkatalysators zu verwenden. Dazu werden die katalytisch aktiven Substanzen auf einem festen Träger immobilisiert.

Als Trägermaterialien kommen z.B. poröse Metalloxide von Metallen der Gruppen 2 bis 14 oder Mischungen derselben infrage, weiterhin Schichtsilikate oder amorphe Kieselgele wie Diatomit, aber auch feste Halogenide von Metallen der Gruppen 1, 2 und 13. Bevorzugte Beispiele für Metalloxide der Gruppen 2 bis 14 sind SiO₂, B₂O₃, Al₂O₃, MgO, CaO und ZnO. Bevorzugte Schichtsilikate sind Montmorrilonite oder Bentonite; bevorzugte Halogenide sind MgCl₂ oder amorphes AlF₃.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel SG 332, Sylopol® 948 oder Sylopol 952 oder S 2101 der Fa. W.R. Grace oder ES 70X der Fa. Crosfield.

Als Partikelgröße des Trägermaterials haben sich mittlere Teilchendurchmesser von 1-300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet; für MgCl₂-Träger sind Temperaturbereiche von 50 bis 100°C bevorzugt. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind an sich unkritisch; das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Auch eine chemische Vorbehandlung des Trägermaterials mit einer Metallalkylverbindung, beispielsweise einer Aluminiumalkylverbindung oder einer Lithiumalkylverbindung, ist möglich; bevorzugte Aluminiumalkylverbindungen sind Trimethylaluminium, Triethylaluminium, Triisobutylaluminium und Tri-*n*-hexylaluminium; ganz besonders bevorzugte Lithiumalkylverbindung ist *n*-Butyllithium. Auch Gemische verschiedener Metallalkylverbindungen lassen sich einsetzen.

Zur Dotierung des Katalysators verfährt man im Allgemeinen so, dass man das Trägermaterial in einem Suspensionsmittel aufschlämmt und diese Suspension mit der Lösung des Komplexsystems vereinigt. Dabei beträgt das Volumen des Suspensionsmittels das 1 bis 20-fache des Porenvolumens des Katalysatorträgers. Anschließend kann der Katalysator durch eine geeignete Methode vom Suspensionsmittel getrennt werden, wie filtrieren, zentrifugieren oder eindampfen.

Die nach dem oben beschriebenen Verfahren erhältlichen Katalysatoren lassen sich besonders gut in Gasphasenverfahren, aber auch in Suspensionsverfahren zur Polymerisation oder Copolymerisation von 1-Olefinen einsetzen, wobei als 1-Olefine Ethylen, Propylen oder But-1-en gewählt werden. Bevorzugt sind Ethylen oder Propylen. Auch zur Copolymerisation von Ethylen und Propylen miteinander oder mit 0 bis 20 mol-% 1-Buten, 1-Penten, 1-Hexen, 1-Octen, 1-Decen oder 1-Undecen sind die erfindungsgemäßen Trägerkatalysatoren geeignet.

Im Gegensatz zu Trägerkatalysatoren, die nach EP-A 0 507 876 hergestellt wurden, sind die erfindungsgemäßen Trägerkatalysatoren frei von giftigen Aminen und leicht oxidierbaren aromatischen Kohlenwasserstoffen wie Triphenylethan. Sie sind monatelang unzersetzt haltbar und polymerisationsaktiv.

Die nach den erfindungsgemäßen Polymerisationsverfahren hergestellten Polymere sind frei von Aminen und leicht oxidierbaren aromatischen Kohlenwasserstoffen wie Triphenylethan und deshalb vorzüglich geeignet für Lebensmittelanwendungen.

Die Erfindung soll anhand eines Arbeitsbeispiels erläutert werden.

### Beispiel

### 1. Herstellung einer Katalysatorlösung

Allgemeine Vorbemerkung: Die Herstellung erfolgte unter einer trockenen Argonatmosphäre. Alle Glasgeräte wurden zur Entfernung von Feuchtigkeit vor Gebrauch ausgeheizt, die Lösemittel wurden vor Verwendung über Na getrocknet und destilliert.

Das verwendete Metallocen (C₆H₅)₂C(Cp)(9-Flu)ZrCl₂ (Formel II) wurde nach der Literaturvorschrift in EP-B 0 387 690 synthetisiert. Das Borat [PhNH(CH₃)₂] [B(C₆H₅)₄] wurde nach A. G. Masey, A.J. Park in *J. Organomet. Chem.* **1964,** *2*, 245 hergestellt.

Zu einer Suspension von 0,2 mmol (111,3 mg) (C₆H₅)₂C(Cp) (9-Flu)ZrCl₂ in 1 ml Benzol wurden 20 mmol (5,0 ml) Al(i-C₄H₉)₃ gegeben. Man beobachtete einen Farbumschlag von orange nach gelb und die Bildung einer klaren Lösung. Nach einer halben Stunde wurde bei 60°C 1 ml Benzol, in dem bei Siedehitze 0,2 mmol (160,2 mg) [PhNH(CH₃)₂] [B(C₆H₅)₄] gelöst worden waren, tropfenweise zugegeben. Man beobachtete eine starke Gasentwicklung. Nach einer Minute war die Reaktion beendet, und man beobachtete die Bildung eines Zweiphasengemischs. Die untere, ölige Phase war stark gefärbt, die obere Phase war farblos.

Mit Hilfe einer Pipette wurde die obere, farblose Phase abgehebert, und die unteren Phase zweimal mit je 2 ml Benzol extrahiert. Die so erhältliche Lösung lässt sich monatelang im Kühlschrank bei Temperaturen von 10°C oder weniger aufbewahren.

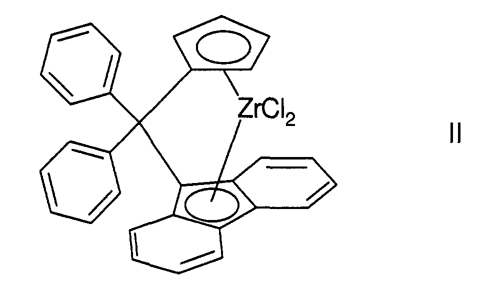

### 2. NMR-spektroskopische Untersuchung der Katalysatorlösung

Versuch 1 wurde wiederholt, jedoch wurde die Reaktion in deuteriertem Benzol C₆D₆ durchgeführt. Für die Extraktion wurde gleichfalls deuteriertes Benzol verwendet.

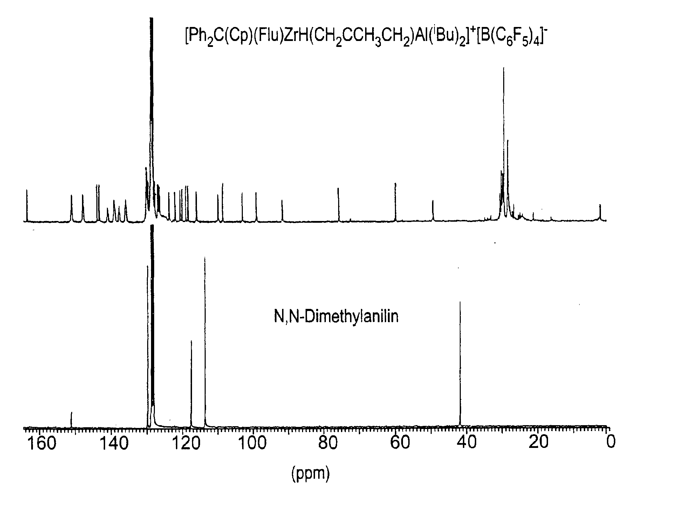

Das NMR-Spektrum zeigt nur Signale, die sich dem heterobinuklearen Komplex
(C₆H₅)₂C(Cp) (9-Flu)ZrH(CH₂CCH₃CH₂)Al{CH₂C(CH₃)₂}₂]⁺[B(C₆H₅)₄]⁻ zuordnen lassen (Abbildung 1). Die Integration der Signale zeigt, dass diese Verbindung nicht durch weiteres Triisobutylaluminium verunreinigt ist. Das Referenzspektrum von *N,N*-Dimethylanilin ist ebenfalls angegeben, man findet keine Signale, die sich *N,N*-Dimethylanilin zuordnen lassen, im Spektrum der Katalysatorlösung.

### 3. Polymerisationen mit der Katalysatorlösung

### 3.1. Vorbereitende Arbeiten

### Versuch 1 wurde wie folgt modifiziert:

Zu einer Suspension von 0,6 mmol (139,5 mg)
(C₆H₅)₂C(Cp)(9-Flu)ZrCl₂ (Formel II) in 3 ml Benzol wurden 60,1 mmol (15,3 ml) Al(i-C₄H₉)₃ gegeben. Nach einer halben Stunde wurde die klare Lösung bei 60°C zu 3 ml Benzol, in dem bei Siedehitze 0,62 mmol (496,5 mg) [PhNH(CH₃)₂] [B(C₆H₅)₄] gelöst worden waren, tropfenweise zugegeben. Man beobachtete eine starke Gasentwicklung. Nach einer Minute war die Reaktion beendet, und man beobachtete die Bildung eines Zweiphasengemischs. Die untere, ölige Phase war stark gefärbt, die obere Phase war schwach gelblich.

Mit Hilfe einer Pipette wurde die obere, farblose Phase abgehebert, und die untere Phase dreimal mit je 4 ml Benzol extrahiert. Die so erhältliche tiefgrüne Lösung wurde zur Polymerisation eingesetzt, wobei die Konzentration des heterobinuklearen Komplexes durch NMR-Spektroskopie ermittelt wurde (Vergleich der Integrale charakteristischer Protonen mit dem Benzolsignal). Die Konzentration wurde zu 8,8 Gew.-% ermittelt.

### 3.2.Polymerisation mit frisch hergestellter Katalysatorlösung:

Zur Polymerisation wurden 68,2 mg Öl, das entspricht 0,004 mmol (6,0 mg) Katalysatorlösung in eine Lösung aus 30 ml Toluol und 20 mg (0,1 mmol) Triisobutylaluminium eindosiert, so dass eine Zr-Konzentration von 0,13 µmol/ml vorlag. Durch die nahezu klare grüne Lösung wurde bei Raumtemperatur unter Rühren 5 min lang Ethylen mit einem Druck von 1 bar durchgeleitet. Während der Polymerisation verfärbte sich die Lösung rasch gelb. Die Reaktionslösung wurde in 100 ml Methanol/HCl getropft, um das gesamte Polymer auszufällen. Nach dem Abfiltrieren und Trocknen wurden 1,130 g Polyethylen erhalten, was einer Produktivität von 3081 kg Polyethylen/mol Zr/h entspricht.

### 3.3. Polymerisation mit 12 Monate alter Katalysatorlösung

Es wurde ein Öl für die Polymerisation verwendet, das zwölf Monate bei -18 °C gelagert worden war.

Zur Polymerisation wurden 39,8 mg des Öls, d. h. 0,0026 mmol (3,5 mg) Katalysatorlösung in eine Lösung aus 30 ml Toluol und 20 mg (0,1 mmol) Triisobutylaluminium eindosiert, so dass eine Katalysatorkonzentration von 0,086 µmol/ml vorlag. Nach 5 min Polymerisation bei Raumtemperatur und 1 bar Ethylendruck wurden nach Ausfällen, Filtrieren und Trocknen 640 mg Polyethylen erhalten. Dies entspricht einer Produktivität von 2953 kg/mol Zr/h.

### 4. Herstellung eines Trägerkatalysators

### 4.1. Herstellung des Katalysatorträgers

In einem 500-ml-Dreihals-Kolben wurden 17 g Kieselgel (Sylopol 948 der Fa. Grace, 8 Stunden bei 180°C und 1 mbar ausgeheizt) in 140 ml n-Heptan aufgeschlämmt und unter Rühren tropfenweise mit 102 ml Triisobutylaluminiumlösung (2 molar in n-Heptan, kommerziell erhältlich bei Fa. Witco) versetzt. Dabei wurde so vorgegangen, dass die Temperatur nicht über 30°C stieg. Anschließend wurde noch 2 Stunden bei Zimmertemperatur gerührt und anschließend mit einer Fritte filtriert. Der Träger wurde zweimal mit je 50 ml Pentan gewaschen und dann im Vakuum getrocknet. Man erhielt 20,4 g Katalysatorträger.

### 4.2.Einsatz einer frisch zubereiteten Katalysatorlösung

In einem 100-ml-Rundkolben wurden 1,7 g Katalysatorträger in 20 ml n-Heptan aufgeschlämmt. Dazu wurden mit Hilfe einer Pipette 162,7 mg Öl, das entspricht 0,0105 mmol (14,32 mg) Zr, eindosiert. Nach 30 Minuten wurde das n-Heptan im Vakuum entfernt, so dass 1,77 g grünlich gefärbter, gut rieselfähiger Katalysator erhalten wurde (Katalysator 1).

### 4.3.Einsatz einer 12 Monate alten Katalysatorlösung

In einem 100-ml-Rundkolben wurden 1,2 g Katalysatorträger in 20 ml n-Heptan aufgeschlämmt. Dazu wurden mit Hilfe einer Pipette 129 mg Öl, das 12 Monate bei -18°C gelagert worden war, entsprechend 0,0101 mmol (13,73 mg) Zr, eindosiert. Nach 30 Minuten wurde das n-Heptan im Vakuum entfernt, so dass 1,29 g grünlich gefärbter, gut rieselfähiger Katalysator (Katalysator 2) erhalten wurde.

### 5. Polymerisation mit den Trägerkatalysatoren

### 5.1. Polymerisation mit Katalysator 1

Unter starkem Rühren wurden 1,77 g Katalysator 1 in 39 ml Toluol, dem 1 ml 2 molare Triisobutylaluminiumlösung (Heptan) zugesetzt worden war, aufgeschlämmt. Anschließend wurde bei Zimmertemperatur 20 min lang Ethylen mit 1 bar durch die Aufschlämmung geleitet. Das Polymer wurde isoliert, indem man die Lösemittel im Vakuum entfernte.
Polymeranalytische Daten: Mₙ = 105.300 g/mol;
M_{w} = 276.100 g/mol; Q = 2,62

### 5.2.Polymerisation mit Katalysator 2

Unter starkem Rühren wurden 1,29 g Katalysator 2 in 39 ml Toluol, dem 1 ml 2 molare Triisobutylaluminiumlösung (Heptan) zugesetzt worden war, aufgeschlämmt. Anschließend wurde bei Zimmertemperatur 20 min lang Ethylen mit 1 bar durch die Aufschlämmung geleitet. Das Polymer wurde isoliert, indem man die Lösemittel im Vakuum entfernte.
Polymeranalytische Daten: Mₙ = 45.950 g/mol,
M_{w} = 178.200 g/mol, Q = 3,88

## Patentansprüche

1. Verfahren zur Herstellung einer Katalysatorlösung zur Polymerisation oder Copolymerisation von 1-Olefinen, **dadurch gekennzeichnet, dass** man konzentrierte Lösungen oder Suspensionen der Komponenten A bis C, bei denen
A mindestens ein Metallocen,
B mindestens eine Metalloceniumionen-bildende Verbindung und
C mindestens eine Metallalkylverbindung
bedeutet,
miteinander vermischt, wobei Komponente C auch in Substanz verwendet werden kann, wenn sie flüssig vorliegt, anschließend das entstehende Zweiphasengemisch trennt und die untere Phase, die das ionisch aktivierte Metallocen enthält, ein oder mehrere Male mit einem Kohlenwasserstoff durch Extraktion reinigt.

2. Verfahren nach Anspruch 1, **dadurch gekennzeichnet, dass** man die Komponenten A, B und C jeweils in Konzentrationen von mindestens 0,1 mol/l einsetzt.

3. Verfahren gemäß Anspruch 1 und 2, **dadurch gekennzeichnet, dass** man als Metallalkylverbindung eine Aluminiumalkylverbindung einsetzt.

4. Verfahren gemäß den Ansprüchen 1 bis 3, **dadurch gekennzeichnet, dass** man als Metalloceniumionen-bildende Verbindung *N,N*-Dimethylanilinium-tetrakis[pentafluorphenylborat] einsetzt.

5. Verfahren gemäß den Ansprüchen 1 bis 4, **dadurch gekennzeichnet, dass** man als Extraktionsmittel einen aromatischen oder aliphatischen Kohlenwasserstoff verwendet.

6. Verwendung der gemäß den Ansprüchen 1 bis 5 hergestellten Katalysatorlösung zur Polymerisation oder Copolymerisation von 1-Olefinen.

7. Verwendung der gemäß den Ansprüchen 1 bis 5 hergestellten Katalysatorlösung zur Herstellung eines Trägerkatalysators.

8. Geträgerter Katalysator zur Polymerisation oder Copolymerisation von 1-Olefinen, erhältlich durch Abscheidung der gemäß den Ansprüchen 1 bis 5 hergestellten Katalysatorlösung auf einem festen Trägermaterial.

9. Verfahren zur Polymerisation oder Copolymerisation von 1-Olefinen unter Verwendung eines geträgerten Katalysators gemäß Anspruch 8.
